# EUROPÄISCHE PATENTSCHRIFT

(11) **EP 2 686 124 B1**
(45) Veröffentlichungstag und Bekanntmachung des Hinweises auf die Patenterteilung: **17.06.2015**
(21) Anmeldenummer: 12714247.9
(22) Anmeldetag: 16.03.2012
(51) Int. Cl.: B23B 31/26, B23Q 11/00

(54) **MOTORSPINDEL**
MOTOR SPINDLE
BROCHE À MOTEUR

(30) Priorität: 18.03.2011 DE 102011014490
(43) Veröffentlichungstag der Anmeldung: 22.01.2014
(73) Patentinhaber: SycoTec GmbH & Co. KG, 88299 Leutkirch im Allgäu (DE)
(72) Erfinder: JOOS, Reinhold, 88410 Bad Wurzach (DE)
(74) Vertreter: Baumann, Rüdiger Walter
(86) Internationale Anmeldenummer: PCT/EP2012/054715
(87) Internationale Veröffentlichungsnummer: WO 2012/126853

(56) Entgegenhaltungen:
- DE-A1- 4 113 269
- DE-A1- 19 848 371
- DE-A1- 19 911 300
- US-A1- 2013 004 257

## Beschreibung

Die Erfindung betrifft eine Motorspindel gemäß dem Oberbegriff des Patentanspruchs 1 für den rotativen Antrieb eines Bearbeitungswerkzeuges um eine Spindelachse, wobei die Motorspindel eine Werkzeugaufnahme für die Aufnahme des Bearbeitungswerkzeuges und eine Spannvorrichtung für die lösbare Befestigung des Bearbeitungswerkzeuges an einer Spindelwelle und die Spannvorrichtung eine Spann- und Freigabevorrichtung aufweist und die Motorspindel eine Reinigungsvorrichtung für das Entfernen von bei der Bearbeitung mit dem Bearbeitungswerkzeug entstehende, sich insbesondere in der Werkzeugaufnahme und/oder Spannvorrichtung befindliche Schmutzpartikel umfasst. Aus der DE 198 48 371 ist eine Werkzeugmaschine mit Spanndorn bekannt. Hier wird ein Reinigungsmedium zur Spülung der Werkzeugaufnahme verwendet.

Die DE 199 11 300 zeigt eine Motorspindel gemäß dem Oberbegriff des Patentanspruchs 1, bei der eine Reinigung der Werkzeugaufnahme durch ein strömungsfähiges Druckmedium erfolgt.

Gattungsgemäße Motorspindeln dienen zum rotativen Antrieb von spannabhebenden Bearbeitungswerkzeugen. Typische Anwendungen sind dabei zum Beispiel Bohren, Fräsen, Schleifen oder Gravieren. Aufgrund der unterschiedlichen Werkstückmaterialien sind die Zerspanprodukte höchst unterschiedlich. Es kann sich dabei um feinsten Staub unterschiedlichster Korngröße oder auch tatsächlich um Späne von wenigen Millimetern bis einigen Zentimetern Länge handeln.

Die gattungsgemäßen Motorspindeln werden für den rotativen Antrieb von Bearbeitungswerkzeugen eingesetzt, die hochgenaue Bearbeitungen, was die Lage der entsprechenden Bearbeitung am Werkstück angeht, ausführen müssen. Bekannte Motorspindeln prägen auf die rotativen Bearbeitungswerkzeuge hohe Rotationsgeschwindigkeiten ein, der Drehzahlbereich kann von 50.000 bis 60.000 U/Min. betragen. Um eine hochgenaue Bearbeitung einerseits und auch eine exakt zentrische Spannung des Bearbeitungswerkzeuges andererseits (zur Vermeidung von die Lager oder die Motorspindel insgesamt zerstörende Unwucht) zu vermeiden, ist die Spannvorrichtung ein wichtiges Element der gattungsgemäßen Motorspindeln. Dabei ist insbesondere darauf zu achten, dass der Spannprozess nicht durch zwischen den Spannbacken und der Spannzange oder sonstigen Elementen der Motorspindel befindlichen Zerspanungsprodukten behindert, beeinträchtigt oder unmöglich gemacht wird.

Hierfür ist im Stand der Technik der Einsatz einer Reinigungsvorrichtung vorgesehen, bei welcher die relevanten Bereiche an der Motorspindel gereinigt werden. Durch den Einsatz der Reinigungsvorrichtung ist zu vermeiden, dass der stark abrasive Abrieb, der bei der spanabhebenden Bearbeitung entsteht, die hochgenau gearbeiteten Flächen der Motorspindel beschädigen. Dazu ist es bekannt, als Reinigungsmedium zum Beispiel Druckluft einzusetzen und die entsprechenden gefährdeten Flächen abzublasen.

Für das Festspannen des Bearbeitungswerkzeuges in der Motorspindel wird als Spannantrieb oftmals eine Federanordnung eingesetzt. Durch einen Freigabeantrieb, der gegen die Kraft der Federanordnung wirkt, wird die Spannzange geöffnet und das Bearbeitungswerkzeug kann aus der Werkzeugaufnahme entnommen werden. Als Freigabeantrieb ist im Stand der Technik zum Beispiel ein pneumatisch wirkender Antrieb vorgesehen. Im Stand der Technik ist der Einsatz eines Schiebeventils bekannt, um den Ausblasvorgang zu steuern. Dieses Schiebeventil ist in seiner Funktion abhängig von der Lage der beweglichen Teile des Arbeitszylinders. Dies ist ungünstig, da oftmals der Einsatz des Reinigungsmediums unabhängig von der Stellung der Spannvorrichtung erfolgen sollte.

Ausgehend von diesem Stand der Technik ist es Aufgabe der Erfindung, den Stand der Technik zu verbessern und zumindest einen der vorgenannten Nachteile zu vermeiden.

Zur Lösung dieser Aufgabe geht die Erfindung aus von einer Motorspindel wie eingangs beschrieben und schlägt vor, dass die Reinigungsvorrichtung mindestens einen Reinigungskanal zur Leitung eines gasförmig und/oder flüssigen Reinigungsmediums umfasst und in dem Reinigungskanal ein druckgesteuertes Absperrventil vorgesehen ist.

Weiter zeichnet sich die Erfindung dadurch aus, dass zumindest der Spann- oder Freigabeantrieb einen hydraulisch oder pneumatisch wirkenden Arbeitszylinder umfasst, der von dem unter Druck stehenden Reinigungsmedium beaufschlagbar ist.

Durch den erfindungsgemäßen Vorschlag gewinnt eine entsprechend ausgestattete Motorspindel eine zusätzliche Funktionalität. Je nach dem eingesetzten Druckpotential im Reinigungsmedium wird ein Wechselprozess des Bearbeitungswerkzeuges mit oder ohne Einsatz des Reinigungsmediums durchgeführt. Durch den erfindungsgemäßen Vorschlag wird die Stellung des Absperrventils entkoppelt von der Lage der Spannvorrichtung beziehungsweise andere Elemente der Spannvorrichtung und kann je nach Prozessführung separat gesteuert werden.

Zudem wird durch die erfindungsgemäße Ausführung eine weitere Nutzung des unter Druck stehenden Reinigungsmediums möglich und somit eine Beaufschlagung des Arbeitszylinders durch ein weiteres Arbeitsmedium oder einen gesonderten Antrieb vermieden.

Diese Unabhängigkeit eröffnet beim Einsatz der Motorspindel weitere Vorteile.

Der Einsatz der Erfindung beschränkt sich in keinster Weise nur auf gasförmige Reinigungsmedien. Es ist bekannt, auch eine Mischung von Gas und flüssigen Reinigungsmedien öder nur flüssigen Reinigungsmitteln einzusetzen, zum Beispiel eine Emulsion und so weiter, um damit auch Wartungs- oder Pflegeaufgaben mit zu erledigen. Darüberhinaus wird durch den erfindungsgemäßen Vorschlag das Reinigungsmedium doppelt genutzt. Das unter Druck stehende Reinigungsmedium wird nicht nur zum Reinigen der entsprechenden Flächen eingesetzt, über das Druckniveau wird das den Strom des Reinigungsmediums steuernde Absperrventil geöffnet oder geschlossen, je nach Druckniveau. Auch der konstruktive Aufwand für die Realisierung des erfindungsgemäßen Vorschlags ist gering. Anstelle einer aufwändigen Mechanik über das schiebegesteuerte Ventil ist jetzt ein verhältnismäßig einfach ausgestaltbares druckgesteuertes Absperrventil vorgesehen, das sich geschickterweise in strömungstechnisch günstiger Lage möglichst verlustfrei im Reinigungskanal befindet.

Ein besonderer Vorzug des Vorschlags ist, dass die Betätigung des Absperrventils unabhängig erfolgt von der Betätigung der Spannvorrichtung oder der Lage einzelner Elemente der Spannvorrichtung bzw. dass das Absperrventil auch zur Regelung der Druckbeaufschlagung des Spann- oder Freigabeantriebes dient. Die Spannvorrichtung besteht zumindest aus einer mindestens eine Spannbacke umfassende Spannzange, die mit dem Bearbeitungswerkzeug zusammenwirkt. Üblicherweise befindet sich die Spannzange und deren Elemente in der hohlen Spindelwelle, die das Drehmoment auf das Bearbeitungswerkzeug überträgt. Die Spindelwelle ist an ihrem vorderen Ende konisch ausgebildet, die auf der Außenseite kegeligen Spannbacken werden radial nah außen vorgespannt und liegen an dem Innenkonus der Spindelwelle an. Durch ein axiales Hereinziehen der Spannzange und der damit verbundenen Spannbacken werden diese Elemente zusätzlich zu ihrer axialen Bewegung auch radial nach innen versetzt und gegen den Schaft des eingesetzten Bearbeitungswerkzeuges gepresst. Derart wird das Bearbeitungswerkzeug in der Spannvorrichtung der Motorspindel gespannt. Unabhängig von der.Lage der einzelnen Elemente der Spannvorrichtung erfolgt der Einsatz des Reinigungsmediums dann, wenn dessen Druckniveau einen entsprechend einstellbaren Wert überschritten hat und das druckbeaufschlagte Reinigungsmedium selbstständig das Absperrventil steuert/öffnet. Dabei ist es günstig, dass in einfacher Weise zum Beispiel durch eine steuerbare Drossel das Druckniveau des Reinigungsmediums beeinflussbar ist und so auch steuerbar ist. Bei Bedarf kann dann das Druckniveau so gesteigert werden, um das Absperrventil zu öffnen und dann durchströmt das Reinigungsmedium den gesamten Kopf der Motorspindel und reinigt die entsprechenden Flächen.

Des Weiteren ist vorgesehen, dass die Spannvorrichtung eine mindestens eine Spannbacke umfassende Spannzange, die mit dem Bearbeitungswerkzeug zusammenwirkt und einen Spann- beziehungsweise Freigabeantrieb umfasst, wobei der Spann- beziehungsweie Freigabeantrieb über eine Anzugstange der Spannvorrichtung auf die Spannzange wirkt. Geschickterweise ist als Spannantrieb eine (energielos wirkende) Federanordnung vorgesehen, als Freigabeantrieb dient ein elektrisch, hydraulisch oder pneumatisch wirkender Antrieb, wobei der Freigabeantrieb über eine Antriebsstange auf die Anzugstange bevorzugt in axial kraft- und/oder formschlüssig wirkt.

Dem Spann- oder Freigabeantrieb ist ein Arbeitszylinder zugeordnet, der hydraulisch oder pneumatisch wirkt und von dem unter Druck stehenden Reinigungsmedium beaufschlagbar ist. Diese Anordnung ergänzt oder ersetzt den zuvor beschriebenen Spann- bzw. Freigabeantrieb.

Die von dem Freigabeantrieb erzeugte Kraft ist der Kraft des Spannantriebs entgegen gerichtet. Tatsächlich wirkt also der Freigabeantrieb bzw. der Arbeitszylinder gegen die Kraft der Federanordnung des Spannantriebs. Für die Ausgestaltung des Freigabeantriebs gibt es eine Vielzahl unterschiedlicher Varianten, es sind hier zum Beispiel hydraulisch oder pneumatisch wirkende Arbeitszylinder als Antriebe vorgesehen, es kann aber auch zusätzlich oder alternativ ein elektrisch wirkender Antrieb vorgesehen sein, dies umfasst zum Beispiel einen Elektromotor, einen elektrisch wirkenden Linearantrieb, einen Elektromagneten oder ähnliches.

Eine besonders platzsparende Anordnung des Absperrventiles wird dann erreicht, wenn dieses von der Antriebsstange getragen wird. Geschickterweise ist das Absperrventil gebildet von einem Absperrkörper, der durch eine Feder in einen Absperrsitz gedrückt wird. Der Absperrsitz ist zum Beispiel in der Antriebsstange realisiert, aber hierauf nicht beschränkt. Als Absperrsitz, als Teil des Absperrventiles, ist auch ein anderes, gegebenenfalls auch nicht bewegliches Bauteil in der Motorspindel vorgesehen. Zum Beispiel ist es möglich, dass sich der Absperrsitz in Gehäuseteilen der Motorspindel (feststehend) befindet, und diese Bereiche entsprechend auch Teile des Reinigungskanales sind.

Geschickterweise ist als Absperrkörper eine Absperrkugel vorgesehen, die auf den Absperrsitz in geeigneter Weise durch eine Feder gedrückt wird. Es ist eine statische oder dynamische Einstellbarkeit des Öffnungsdruckes des Absperrventiles vorgesehen. Eine statische Einstellbarkeit wird zum Beispiel dadurch erreicht, dass bei der Montage der Motorspindel die Kraft, mit welcher die Feder den Absperrkörper in den Absperrsitz drückt, eingestellt wird. Es ist aber auch möglich, eine Einstellbarkeit auch nach Montage der Motorspindel vorzusehen, welche als dynamische Einstellbarkeit bezeichnet wird. Dies hat insbesondere den Vorteil, dass entsprechende Kalibrierungsschritte durchgeführt werden können, oder aber auch eine nachträgliche Justage an andere Druckparamter möglich ist. Die Flexibilität einer solchenmaßen ausgestatteten Motorspindel ist entsprechend höher.

Von Vorteil ist, dass zwischen der Anzugstange und der axial gegen die Anzugstange anstellbaren Antriebsstange eine Dichtung vorgesehen ist. Die Anzugstange ist in der Spindelwelle axial beweglich geführt und gelagert. Die Anzugstange wird durch den Spannantrieb vom Spindelkopf weg nach innen gezogen, wodurch die Spannbacken den Werkzeugschaft des eingesetzten Bearbeitungswerkzeuges festklemmen. In einer entgegengerichteten Bewegung, die durch den Freigabeantrieb realisiert wird und von der Antriebsstange auf die Anzugstange übertragen wird, wird der Werkzeugwechselvorgang eingeleitet. Es ist daher ein entsprechender Spalt zwischen dem Ende der Anzugstange und dem Ende der Antriebsstange vorhanden, der geschickterweise durch eine Dichtung abgeschlossen oder abgedichtet wird, da dieser Bereich zum Reinigungskanal zählt, durch welchen bei geöffnetem Absperrventil, welches bevorzugt ja in der Antriebsstange angeordnet ist, das druckbeaufschlagte Reinigungsmedium strömt. Durch den Einsatz der Dichtung werden Verlustströme minimiert.

Zum Reinigungskanal im Sinne dieser Anmeldung zählen all die Räume in der Motorspindel, die von dem Reinigungsmedium durchspült oder durchströmt werden. Der Anschlußbereich der Motorspindel, an welchem die Motorspindel an eine entsprechende Versorgung angeschlossen wird, zählt dabei genauso zum Reinigungskanal, wie auch der Spindelkopf, an welchem das Reinigungsmedium zum Beispiel aus der Werkzeugaufnahme oder aus der Spannvorrichtung wieder entweicht. Konstruktiv in der Anordnung vorgesehene Spalte werden dabei geschickterweise doppelt genützt und als Reinigungskanal beziehungsweise einen Teil des Reinigungskanals mit genützt. So ist zum Beispiel vorgesehen, dass zumindest ein Teil des Reinigungskanales gebildet ist von einem Spalt zwischen der das Bearbeitungswerkzeug rotativ antreibenden, hohlen Spindelwelle und der in ihr angeordneten Anzugstange. Die Anzugstange ist gegenüber der Spindelwelle axial versetzbar und zwar in ihr geführt, aber doch beweglich gelagert. Der Spalt bildet dabei einen Teil des Reinigungskanales, dieser kann gegebenenfalls auch eine separat eingearbeitete Nut oder ähnliches sein.

Zu dem Reinigungskanal zählen nicht nur die Bereiche, in welche das Reinigungsmedium nur strömt, der Reinigungskanal umfaßt auch die Bereice, deren Flächen tatsächlich zu reinigen also zu spülen sind. Hierzu zählt insbesondere der Abstand oder Spalt zwischen den Elementen der Spannzange beziehungsweise des oder der Spannbacken und der diese Bauteile umgebenden Spindelwelle. Wie bereits ausgeführt, befindet sich am Spindelkopf an der Spindelwelle ein Konus. Der Konus wirkt auf die Spannbacke/n. Durch das axiale Versetzen des Spannbackens durch die axiale Versetzung der Spannzange gleitet der Spannbacken auf dem Konus und bewegt sich somit auch radial nach innen. Schmutzpartikel, die sich in diesem Spalt befinden, sind schädlich, weswegen es günstig ist, dass dieser Bereich zum Reinigungskanal zählt und von dem Reinigungsmedium durchspült und gereinigt beziehungweise ausgeblasen wird.

Genauso zählt auch die Werkzeugaufnahme zum Reinigungskanal, beziehungsweise bildet einen Teil des Reinigungskanales, wobei die Werkzeugaufnahme sich koaxial um die Spindelachse herum erstreckt und dazu dient, den Werkzeugschaft des Bearbeitungswerkzeuges aufzunehmen.

Bei geöffnetem Absperrventil ist vorgesehen, dass das Reinigungsmedium in wesentlich axialer Richtung, bezogen auf die Spindelachse, aus der Werkzeugaufnahme entweicht. Grundsätzlich ist es möglich, dass zusätzliche Sperrluft oder Sperrmedienströme vorgesehen sind, um eine zusätzliche Reinigung zu ermöglichen oder auch Verschmutzungsgefahr durch einen Sperrluftvorhang zu bannen. Diese Sperrmedienströme sind sowohl axial, wie auch radial oder hierzu schräg orientiert und entweichen ebenfalls im Bereich des Spindelkopfes.

Geschickterweise ist nach dem Absperrventil im Reinigungskanal mindestens ein Abzweig vorgesehen, durch welchen der Strom des Reinigungsmediums aufgeteilt wird, nämlich auf den Spalt zwischen den Elementen der Spannzange beziehungsweise des/der Spannbacken und der Spindelwelle beziehungsweise auf die Werkzeugaufnahme. Hierdurch wird durch das zentral angeordnete Absperrventil an die verschiedensten Flächen und Bereiche ein ausreichender Strom von Reinigungsmedium hingeführt und verteilt.

Günstigerweise ist vorgesehen, dass die Spannzange, Elemente der Spannzange beziehungsweise die Spannbacke/n mindestens eine Öffnung oder Durchbrechnung zur Bildung des Abzweiges aufweist. Durch diese Ausgestaltung wird in einfacher Weise erreicht, dass der Reinigungsmediumstrom um alle Elemente der mit den Schmutzpartikeln unmittelbar beaufschlagten Teile und Elemente der Spannzange beziehungsweise der Spannbacken geführt ist und so eine effektive Reinigung und Spülung beziehungsweise Abblasen erfolgt.

Von besonderem Vorteil ist in diesem Zusammenhang, dass das unter Druck stehende Reinigungsmedium nicht nur die entsprechend betroffenen Flächen am Reinigungskanal reinigt, des weiteren bei entsprechendem Druckniveau selbständig das Absperrventil im Reinigungskanal öffnet, sondern das unter Druck stehende Reinigungsmedium auch in einen entsprechenden Arbeitszylinder eingeleitet wird und diesen betreibt. Es ergibt sich unmittelbar, dass hierdurch das unter Druck stehende Reinigungsmedium vielfach genützt werden kann und diese hohe Effizienz führt zu einem konstruktiv geschickten Aufbau, bei welchem mit einer geringen Anzahl von Bauteilen eine hohe Flexibilität erreicht wird. Gleichwohl ist die Anordnung so gewählt, dass die Betätigung des Absperrventiles, unabhängig von der Lage der Antriebsstange, durch den mit dem unter Druck stehenden Reinigungsmittel betriebenen Arbeitszylinder allein durch den Druck des Reinigungsmediums erfolgt.

In der Zeichnung ist die Erfindung insbesondere in einem Ausführungsbeispiel schematisch dargestellt. Es zeigen:
- Fig. 1a, 2a: je in einer Schnittdarstellung zwei Varianten der erfindungsgemäßen Motorspindel,
- Fig. 1b: in einer Detailvergrößerung den .durch einen Kreis gekennzeichneten Bereich nach Fig. 1a,
- Fig. 2b: in einer Detailvergrößerung den vorderen Teil der erfindungsgemäßen Motorspindel nach Fig. 2a;

In den Figuren sind gleiche oder einander entsprechende Elemente jeweils mit den gleichen Bezugszeichen bezeichnet und werden daher, sofern nicht zweckmäßig, nicht erneut beschrieben.

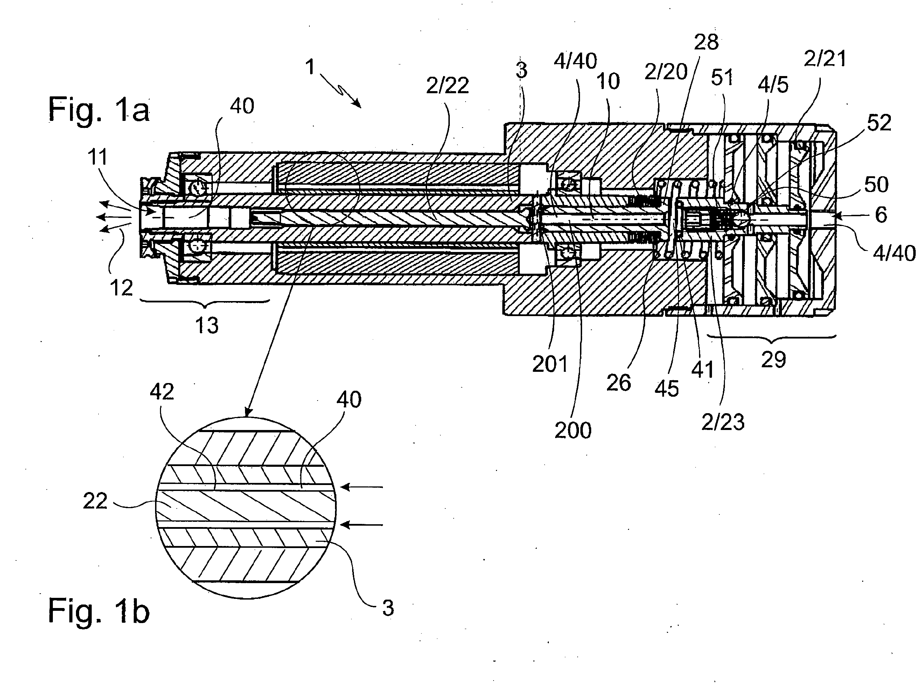

Der prinzipielle Aufbau einer Motorspindel 1 ist beispielsweise in Fig. 1a gezeigt. Am vorderen, offenen Ende besitzt die Motorspindel 1 eine Werkzeugaufnahme 11, in welcher der Schaft eines Bearbeitungswerkzeuges einsteckbar ist. Die Einstecktiefe des Schaftes beschreibt dabei die Länge des Spindelkopfes 13. Aufgabe einer Motorspindel ist es, das Bearbeitungswerkzeug, das hier nicht gezeigt ist, um die Spindelachse 10 in Rotation zu versetzen. Der Aufbau der hier gezeigten Motorspindel 1 ist geeignet, um als Hochgeschwindigkeitsspindel eingesetzt zu werden.

In der Motorspindel 1 ist eine Spindelwelle 3 drehbar gelagert. Die Spindelwelle 3 ist hohl. Sie nimmt an ihrem vorderen Ende, dem Spindelkopf, das Bearbeitungswerkzeug auf. Die Rotationsachse der Spindelwelle 3 definiert die Spindelachse 10. Die Spindelwelle 3 ist in axialer Richtung (bezogen auf die Spindelachse 10) definiert gelagert.

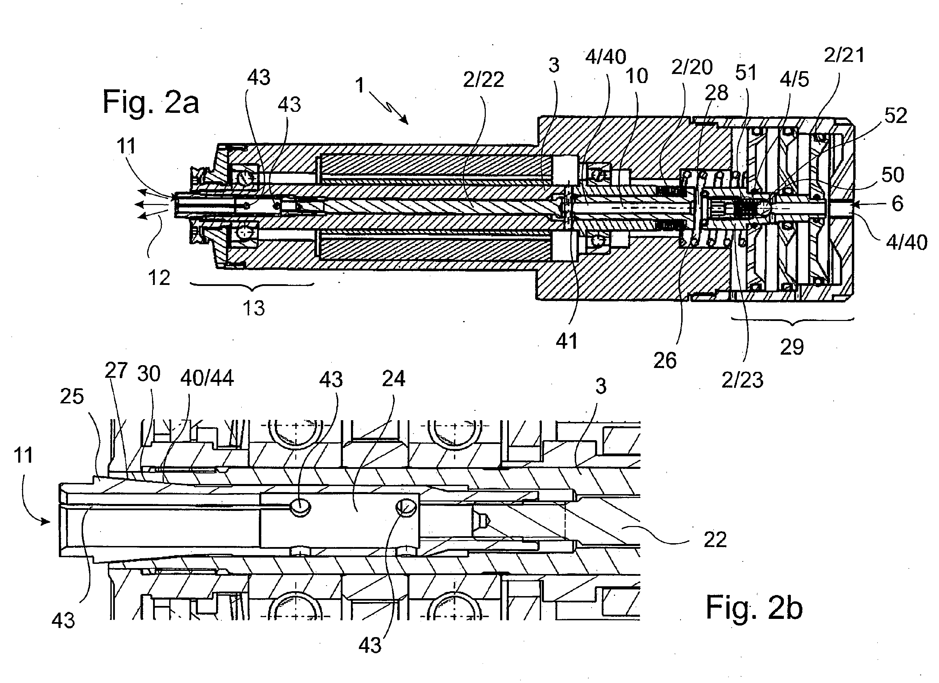

Für die Befestigung des Schaftes des Bearbeitungswerkzeuges dient die Spannzange 24, die insbesondere in Fig. 2b vergrößert gut gezeigt ist. Die Spannzange 24 besitzt mehrere, bezüglich der Spindelachse 10, am Umfang angeordnete Spannbacken 25. Die Spannzange 24 ist zumindest kraftschlüssig mit der Anzugstange 22 derart verbunden, dass eine axiale Bewegung der Anzugstange 22 zu einer axialen Bewegung der Spannzange 24 führt. Die Verbindung zwischen der Spannzange 24 und der Anzugstange 22 erfolgt dabei zum Beispiel über eine Schraubung. Die vorgenannten Elemente gehören alle zur Spannvorrichtung 2, die zum Befestigen des Bearbeitungswerkzeuges auf der Spindelwelle 3 dienen. Im Spindelkopf 13 ist das vordere, offene Ende der Spindelwelle 3 innenkonusartig 30 ausgebildet. Die einzelnen Spannbacken 25 besitzen eine kegelige Außenfläche 27, die in der in Fig. 2 gezeigten Variante parallel zum Konus 30 orientiert ist. Die Spannbacken 25 werden geeigneterweise radial nach außen (bezogen auf die Spindelachse 10) beaufschlagt oder vorgespannt. Wird nun die Anzugstange 22 nach rechts versetzt, so wird auch die Spannzange 24 und damit auch die einzelnen Spannbacken 25 axial nach rechts versetzt und gleichzeitig auch die verschiedenen Spannbacken 25 radial nach innen gezogen, um den in die Werkzeugaufnahme 11 eingesetzten Werkzeugschaft festzuklemmen. Durch die umgekehrte Bewegung der Anzugstange 22, zum Beispiel bei einem Freigabeprozess, wird die Klemmung des Werkzeugschaftes durch die Spannbacken 25 aufgehoben und das Werkzeug kann entnommen werden.

Die Spannvorrichtung 2 umfasst einen Spannantrieb 20 und einen Freigabeantrieb 21, die jeweils kraftschlüssig beziehungsweise kraft- und formschlüssig auf die Anzugstange 22 wirken.

Als Spannantrieb 20 ist eine Federanordnung, zum Beispiel eine Tellerfederanordnung, vorgesehen. Diese Federanordnung 20 stützt sich dabei auf dem hinteren Ende der Spindelwelle 3 einerseits und auf einem Endflansch 28 der Anzugstange 22 ab.

Dies ist auf der der Spannzange 24 abgewandten Seite jeweils angeordnet. Da die axiale Lage der Spindelwelle 3 festgelegt ist, presst die Federanordnung 20 über den Endflansch 28 die Anzugstange 22 nach rechts (beziehungsweise ins Spindelinnere), wodurch in gespanntem Zustand die Spannbacken 25 über den vorbeschriebenen Prozess radial gegen den Schaft des Bearbeitungswerkzeuges gedrückt wird.

In Fig. 2a, 2b ist die Spannzange 24 im Bereich der Werkzeugaufnahme 11 gezeigt, in Fig. 1a ist diese weggelassen. Im übrigen ist der Aufbau gleich.

Um das festgespannte Bearbeitungswerkzeug zu lösen, ist ein Freigabeantrieb 21 vorgesehen. In dem hier in Fig. 1a, 2a gezeigten Ausführungsbeispiel ist der Freigabeantrieb 21 als insbesondere pneumatisch wirkender Arbeitszylinder 29 ausgebildet, bei welchem der Arbeitsdruck des auf die Kolbenflächen wirkenden Mediums den Kolben und die mit dem Kolben verbundene Antriebsstange 23 derart nach links, in Richtung des Spindelkopfes 13 versetzt, sodass die Antriebsstange 23 gegen die Kraft des Federpaketes des Spannantriebes 20 auf die Anzugstange 22 drückt und die Federanordnung komprimiert. Dadurch wird die Anzugstange 22 insgesamt nach links, also in Richtung des Spindelkopfes 13 versetzt und die kegeligen Flächen 27 der nach außen vorgespannten Spannbacken 25 gleiten auf dem Konus 30 nach außen und geben den Schaft des Bearbeitungswerkzeuges frei.

Der Zylinderraum des Arbeitszylinders 29 ist dabei über entsprechende Leitungen mit dem Medienanschluss 6 verbunden. Gleichzeitig wird über diesen Anschluss 6 auch das Reinigungsmedium in den Reinigungskanal 40 gegeben, wobei der Reinigungskanal 40 und andere Elemente jeweils Teile der Reinigungsvorrichtung 4 sind. Es ist ein Vorzug dieses Vorschlages, dass das unter Druck befindliche Reinigungsmedium, welches auch in den Arbeitszylinder 29 eingeleitet wird, auch gleichzeitig als Reinigungsmedium für die Spannzange 24 beziehungsweise die Werkzeugaufnahme 11 ist. Dieser Doppelnutzen ist ein zusätzlicher Effekt der Erfindung, aber nicht auf diesen alleine beschränkt. Unabhängig von der Lage der einzelnen Elemente des Freigabeantriebs 21, namentlich des Kolbens beziehungsweise der Antriebsstange 23, ist ein druckgesteuertes Absperrventil 5, welches auch Element der Reinigungsvorrichtung 4 ist, im Reinigungskanal 40 vorgesehen. Das druckgesteuerte Absperrventil 5 wird geöffnet, wenn das Druckniveau in der über den Anschluss 6 anliegenden druckbeaufschlagten Reinigungsmedium so hoch ist, dass die resultierende Kraft auf den Absperrkörper 50 größer ist, wie die von der Feder 51 gebildete Schließkraft, die den hier als Kugel gebildeten Absperrkörper 50 in den Absperrsitz 52 presst.

Wesentlich ist, dass diese Öffnungs- oder Schließfunktion unabhängig erfolgt von der konkreten Stellung der Spannvorrichtung 2 beziehungsweise den Elementen der Spannvorrichtung 2, wie der Spannzange 24 oder der Spannbacke 25.

In dem hier gezeigten Ausführungsbeispiel ist das Absperrventil 5 in der Antriebsstange 23 (konzentrisch) angeordnet. Es ist für die Erfindung gleichwertig, ob das Absperrventil 5 in einem von der Spannvorrichtung 2 bewegtem oder in der Motorspindel 1 feststehendem Element integriert ist.

In dem in Fig. 1a beziehungsweise 2a gezeigten Ausführungsbeispiel befindet sich zwischen der Antriebsstange 23 und der Anzugstange 22 ein kleiner Spalt 45, der geschlossen wird, wenn der Freigabeantrieb 21 die Antriebsstange 23 komplett nach links versetzt. Zusätzlich ist hier eine Dichtung 41 vorgesehen, die in der radialorientierten Stirnfläche der Antriebsstange 23 angeordnet ist und den Spalt 45 abdichtet.

Durch die Rückstellfeder 26 wird der gesamte Freigabeantrieb 21, der Kolben des Arbeitszylinders 29 zurückgesetzt. Gegebenenfalls ist im Bereich der Rückstellfeder 26 eine weitere (nicht gezeigte) Dichtung vorgesehen, um zu erreichen, dass das Reinigungsmedium zielgerichtet fließen kann.

Nach der Antriebsstange 23 schließt sich die Anzugstange 22 an, die in dem hier liegenden Bereich zunächst eine längsverlaufende Sackbohrung 200 aufweist. Diese Sackbohrung 200 ist ebenfalls Teil des Reinigungskanals 40. Am Boden dieser Sackbohrung 200 ist eine Querbohrung 201, die ebenfalls Teil des Reinigungskanals 40 ist, vorgesehen. Das eintretende, unter Druck befindliche Reinigungsmedium strömt dann in den Spalt zwischen der Anzugstange 22 und der Spindelwelle 3, dieser Spalt ist in Fig. 1b vergrößert herausgezeichnet und mit 42 gekennzeichnet. Auch dieser Spalt ist Teil des Reinigungskanals 40. Dieser Spalt 42 umgibt diesen massiven Bereich der Anzugstange 22 über die gesamte Länge bis zum Ansatzpunkt beziehungsweise Verbindungspunkt mit der Spannzange 24.

Die kritischen Bereiche, bei welchen sich bei der zerspanenden Bearbeitung mit dem Bearbeitungswerkzeug Verunreinigungen ablagern können, die hinterher zu Schwierigkeiten beim Spannen führen können, liegen im Bereich der (inneren) Werkzeugaufnahme 11, also an den Innenflächen des, dem Werkzeugschaft zugewandten Spannbacken 25 und an den kegeligen Flächen 27 der Spannbacken 25, die mit dem Konus 30 am Ende der Spindelwelle 3 zusammenwirken. Das eingeströmte, unter Druck stehende Reinigungsmedium wird daher in diese Bereiche hin aufgeteilt, wofür die verschiedenen Durchbrüche, Spalte beziehungsweise Abzweige 43 an der Spannzange 24 dienen.

Mit 44 ist in Fig. 2b ebenfalls ein Spalt gekennzeichnet, der sich zwischen der Außenfläche der Spannbacken 25, die kegelig ist, und dem Konus 30 befindet. Das unter Druck stehende Reinigungsmedium gelangt durch die Öffnungen 43 in das Innere der Spannzange 24, die Werkzeugaufnahme 11 und spült dort. Der Durchbruch 43 dient dabei als Abzweig 43, ein Teil des unter Druck stehenden Mediums gelangt auch in den Spalt 44 zwischen der kegelartigen Außenfläche 27 und dem Konus 30 und spült dort.

Das Absperrventil 5 ist mit einer Einstellvorrichtung ausgestatten, wodurch der Öffnungsdruck am Absperrventil 5 einstellbar ist. Es ist nun möglich, verschiedene Szenarien zu realisieren. Zum Beispiel wird ein Reinigungsmedium mit 6 bar auf den Anschluss 6 gelegt. Bei einem Druck von 5,5 bar öffnet sich das Absperrventil 5, durch welche die Kegelreinigung beziehungsweise die Werkzeugaufnahmereinigung erfolgt. Bei 5 bar wird bereits die Spannvorrichtung entriegelt, das heißt der Freigabeantrieb 21 versetzt die Anzugstange 22 derart nach Außen, dass das Werkzeug entnommen werden kann. Bei dieser Ausgestaltung wird also zuerst die Spannvorrichtung gelöst und dann druckgesteuert, das Reinigen der gefährdeten Flächen durchgeführt. Es ist aber auch möglich, eine andere Prozessführung einzuschlagen. Zum Beispiel wird das Absperrventil bereits bei 4 bar geöffnet (die Spannvorrichtung wird erst bei 5 bar gelöst), wodurch sich ergibt, dass bereits der gesamte Spindelkopf 13 unter Druck steht und bei dem sich lösendem Bearbeitungswerkzeug die sich bildenden Spalten sofort mit Reinigungsmedium unter hoher Geschwindigkeit durchflutet werden. Es kann gerade, zum Beispiel bei der Werkzeugaufnahme, bei welcher ein verhältnismäßig großer Durchmesser zu reinigen ist, von Vorteil sein.

## Patentansprüche

1. Motorspindel für den rotativen Antrieb eines Bearbeitungswerkzeuges um eine Spindelachse, wobei die Motorspindel eine Werkzeugaufnahme für die Aufnahme des Bearbeitungswerkzeuges und eine Spannvorrichtung für die lösbare Befestigung des Bearbeitungswerkzeuges an einer Spindelwelle aufweist und die Spannvorrichtung einen Spann- und Freigabeantrieb aufweist, die Motorspindel eine Reinigungsvorrichtung für das Entfernen von bei der Bearbeitung mit dem Bearbeitungswerkzeug entstehenden, sich insbesondere in der Werkzeugaufnahme und/oder Spannvorrichtung befindlichen Schmutzpartikeln umfasst, wobei die Reinigungsvorrichtung (4) mindestens einen Reinigungskanal (40) zur Leitung eines gasförmig und/oder flüssigen, unter Druck stehenden Reinigungsmediums umfasst, und in dem Reinigungskanal (40) ein druckgesteuertes Absperrventil (5) vorgesehen ist, **dadurch gekennzeichnet, dass** zumindest der Spann- oder Freigabeantrieb einen hydraulisch oder pneumatisch wirkenden Arbeitszylinder umfasst, der von dem unter Druck stehenden Reinigungsmedium beaufschlagbar ist.

2. Motorspindel nach Anspruch 1, **dadurch gekennzeichnet, dass** die Betätigung des Absperrventils (5) unabhängig erfolgt von der Betätigung der Spannvorrichtung (2) oder der Lage einzelner Elemente der Spannvorrichtung (2).

3. Motorspindel nach Anspruch 1 oder 2, **dadurch gekennzeichnet, dass** die Spannvorrichtung (2) eine mindestens eine Spannbacke (25) umfassende Spannzange (24), die mit dem Bearbeitungswerkzeug zusammenwirkt, und einen Spann- (20) beziehungsweise Freigabeantrieb (21) umfasst, wobei der Spann- (20) beziehungsweise Freigabeantrieb (21) über eine Anzugstange (22) der Spannvorrichtung (2) auf die Spannzange (24) wirkt.

4. Motorspindel nach einem der vorhergehenden Ansprüche, **dadurch gekennzeichnet, dass** als Spannantrieb (20) beziehungsweise als Freigabeantrieb (21) eine Federanordnung, ein elektrisch, hydraulisch oder pneumatisch wirkender Antrieb vorgesehen ist und der Freigabeantrieb (21) über eine Antriebsstange (23) auf die Anzugstange (22) axial kraft- und/oder formschlüssig wirkt.

5. Motorspindel nach einem der vorhergehenden Ansprüche, **dadurch gekennzeichnet, dass** die Antriebsstange (23) das Absperrventil (5) trägt und/oder das Absperrventil (5) gebildet ist von einem Absperrkörper (50), der durch eine Feder (51) in einen Absperrsitz (52) gedrückt wird und/oder der Öffnungsdruck des Absperrventils (5) einstellbar ist.

6. Motorspindel nach einem der vorhergehenden Ansprüche, **dadurch gekennzeichnet, dass** zwischen der Anzugstange (22) und der axial gegen die Anzugstange (22) anstellbaren Antriebsstange (23) eine Dichtung (41) vorgesehen ist.

7. Motorspindel nach einem der vorhergehenden Ansprüche, **dadurch gekennzeichnet, dass** zumindest ein Teil des Reinigungskanals (40) gebildet ist von einem Spalt (42) zwischen der das Bearbeitungswerkzeug rotativ antreibenden, hohlen Spindelwelle (3) und der in ihr angeordneten Anzugstange (22).

8. Motorspindel nach einem der vorhergehenden Ansprüche, **dadurch gekennzeichnet, dass** zumindest ein Teil des Reinigungskanals (40) gebildet ist von einem Spalt (42) zwischen den Elementen der Spannzange (24) beziehungsweise des/der Spannbacken (25) und der Elemente der Spannzange (24) beziehungsweise die Spannbacken (25) umgebenden Spindelwelle (3).

9. Motorspindel nach einem der vorhergehenden Ansprüche, **dadurch gekennzeichnet, dass** zumindest ein Teil des Reinigungskanals (40) gebildet ist von der Werkzeugaufnahme (11), die dazu vorgesehen ist, den Werkzeugschaft des Bearbeitungswerkzeuges aufzunehmen.

10. Motorspindel nach einem der vorhergehenden Ansprüche, **dadurch gekennzeichnet, dass** bei geöffnetem Absperrventil (5) das Reinigungsmedium in wesentlich axialer Richtung (12), bezogen auf die Spindelachse (10), aus der Werkzeugaufnahme (11) entweicht.

11. Motorspindel nach einem der vorhergehenden Ansprüche, **dadurch gekennzeichnet, dass** nach dem Absperrventil (5) im Reinigungskanal (40) ein Abzweig (43) vorgesehen ist, durch welchen der Strom von Reinigungsmedium aufgeteilt wird auf den Spalt (42) zwischen den Elementen der Spannzange (24) beziehungsweise des/der Spannbacken (25) und der Spindelwelle (3) beziehungsweise auf die Werkzeugaufnahme (11).

12. Motorspindel nach einem der vorhergehenden Ansprüche, **dadurch gekennzeichnet, dass** die Spannzange (24), Elemente der Spannzange (24) beziehungsweise die Spannbacke/n (25) mindestens eine Öffnung oder Durchbrechung zur Bildung des Abzweiges (43) aufweist.

13. Motorspindel nach einem der vorhergehenden Ansprüche, **gekennzeichnet durch** einen Anschluss (6) für das unter Druck stehende Reinigungsmedium, wobei als Freigabeantrieb (21) ein mit dem unter Druck stehenden Reinigungsmedium betriebener Arbeitszylinder (29) vorgesehen ist und das Absperrventil (5) unabhängig von der Lage der Antriebsstange (23) **durch** den Druck des Reinigungsmediums gesteuert wird.

## Claims

1. Motor spindle for the rotational drive of a machining tool around a spindle axis, wherein the motor spindle has a tool holder for holding the machining tool and a clamping device for the releasable attaching of a machining tool to a spindle shaft, and the clamping device has a clamping and releasing drive, the motor spindle comprises a cleaning device for the removal of dirt particles occurring during machining with the machining tool, the dirt particles being collected in particular in the tool holder and/or clamping device, wherein the cleaning device (4) comprises at least one cleaning channel (40) for conducting a gaseous and/or liquid, pressurized cleaning agent, and in the cleaning channel (40) a pressure-controlled stop valve (5) is provided, **characterized in that** at least the clamping or releasing drive comprises a hydraulically or pneumatically acting working cylinder that can be pressurized by the pressurized cleaning agent.

2. Motor spindle according to claim 1, **characterized in that** the operating of the stop valve (5) is performed independently from the operating of the clamping device (2) or the position of single elements of the clamping device (2).

3. Motor spindle according to claim 1 or 2, **characterized in that** the clamping device (2) comprises a collet chuck (24 comprising at least one clamping jaw (25) and interacting with the machining tool, and a clamping (20) and/or releasing (21) drive, wherein the clamping (20) and/or releasing (21) drive acts via a draw bar (22) of the clamping device (2) on the collet chuck (24).

4. Motor spindle according to one of the preceding claims, **characterized in that** as clamping drive (20) and/or releasing drive (21) a spring arrangement, an electrically, hy-draulically, or pneumatically acting drive is provided, and the releasing drive (21) acts via an actuator stem (23) on the draw bar (22) axially force-fitting and/or form-fitting.

5. Motor spindle according to one of the preceding claims, **characterized in that** the actuator stem (23) carries the stop valve (5), and/or the stop valve (5) is formed by a shut-off body (50) pressed in a shut-off seat (52) by a spring (51), and/or the opening pressure of the stop valve (5) can be set.

6. Motor spindle according to one of the preceding claims, **characterized in that** between the draw bar (22) and the ac-tuator stem (23) that can be angled axially towards the draw bar (22) a seal (41) is provided.

7. Motor spindle according to one of the preceding claims, **characterized in that** at least a part of the cleaning channel (40) is formed by a gap (42) between the hollow spindle shaft (3) rotationally driving the machining tool and the draw bar (22) arranged therein.

8. Motor spindle according to one of the preceding claims, **characterized in that** at least a part of the cleaning channel (40) is formed by a gap (42) between the elements of the collet chuck (24) and/or the clamping jaw(s) (25) and the elements of the collet chuck (24) and/or the spindle shaft (3) surrounding the clamping jaws (25).

9. Motor spindle according to one of the preceding claims, **characterized in that** at least a part of the cleaning channel (40) is formed by the tool holder (11) provided for holding the tool shank of the machining tool.

10. Motor spindle according to one of the preceding claims, **characterized in that** when the stop valve (5) is opened, the cleaning agent escapes from the tool holder (11) in essen-tially axial direction (12) with respect to the spindle axis (10).

11. Motor spindle according to one of the preceding claims, **characterized in that** downstream the stop valve (5) in the cleaning channel (40) a branch (43) is provided that splits up the flow of cleaning agent into the gap (42) between the elements of the collet chuck (24) and/or the clamping jaw(s) (25) and the spindle shaft (3) and/or the tool holder (11).

12. Motor spindle according to one of the preceding claims, **characterized in that** the collet chuck (24), elements of the collet chuck (24) and/or the clamping jaw(s) (25) have at least one opening or breach for forming the branch (43).

13. Motor spindle according to one of the preceding claims, **characterized by** a connection for the pressurized cleaning agent, wherein as releasing drive (21) a working cylinder (29) is provided operated by the pressurized cleaning agent, and the stop valve (5) is controlled by the pressure of the cleaning agent independently from the position of the actuator stem (23).

## Revendications

1. Broche à moteur destinée à une commande rotative d'un outil d'usinage en mouvement autour d'un arbre de rotation de façon à ce que l'arbre de commande possède un porte-outil pour la réception de l'outil d'usinage et un dispositif de serrage destiné à maintenir de façon amovible l'outil d'usinage au niveau de l'arbre de rotation et en ce que le dispositif de serrage comprend une commande de serrage et de relâchement et la broche à moteur un dispositif de nettoyage destiné à enlever des particules de saleté se trouvant en particulier à l'intérieur du porte-outil et/ou du dispositif de serrage et générées lors de l'usinage par l'outil d'usinage et en ce que le dispositif de nettoyage (4) comporte au moins un canal de nettoyage (40) conduisant un fluide de nettoyage sous pression et sous forme gazeuse et/ou liquide et en ce qu'une vanne d'arrêt (5) commandée par pression est prévue dans le canal de nettoyage (40) **caractérisée en ce qu'**au moins la commande de serrage et de relâchement comporte un vérin hydraulique ou pneumatique pouvant être commandé par la substance de nettoyage sous pression.

2. Broche à moteur selon la revendication 1, **caractérisée en ce que** l'actionnement de la vanne d'arrêt (5) s'effectue indépendamment de l'actionnement du dispositif de serrage (2) ou quelle soit la position d'éléments individuels du dispositif de serrage (2).

3. Broche à moteur selon les revendications 1 ou 2, **caractérisée en ce que** le dispositif de serrage (2) comprend une pince de serrage (24) interagissant avec l'outil d'usinage et comprenant au moins un mors de serrage (25) et une commande de serrage (20) ou de relâchement (21) de façon à ce que la commande de serrage (20) ou de relâchement (21) agit sur la pince de serrage (24) via une tige de rappel (22).

4. Broche à moteur selon une des revendications précédentes, **caractérisée en ce qu'**un dispositif à ressorts ou une commande électrique, hydraulique ou pneumatique est prévu(e) comme commande de serrage (20) ou comme commande de relâchement (21) et **en ce que** la commande de relâchement (21) agit via une tige de commande (23) sur la tige de rappel (22) par un transfert de force en direction axiale par friction et/ou par sa forme.

5. Broche à moteur selon une des revendications précédentes, **caractérisé en ce que** la tige de commande (23) porte la vanne d'arrêt (5) et/ou **en ce que** la vanne d'arrêt (5) est formée par un corps d'arrêt (50) plaquée par un ressort (51) dans un siège d'arrêt (52) et/ou **en ce que** la force d'ouverture de la vanne d'arrêt (5) est réglable.

6. Broche à moteur selon une des revendications précédentes, **caractérisée en ce qu'**un joint d'étanchéité (41) est prévu entre la tige d'appel (22) et la tige de commande (23) appuyant en direction axiale contre la tige de commande (23).

7. Broche à moteur selon une des revendications précédentes, **caractérisée en ce qu'**au moins une partie du canal de nettoyage (40) est formée par une fente (42) entre l'arbre de rotation creux (3) commandant le mouvement rotatif de l'outil d'usinage et de la tige de rappel (22) située à l'intérieur de l'arbre de rotation.

8. Broche à moteur selon une des revendications précédentes, **caractérisée en ce qu'**au moins une partie du canal de nettoyage (40) est formée par une fente (42) entre les éléments de la pince de serrage (24) ou de(s) mors de serrage (25) et l'arbre de rotation (3) entourant les éléments de la pince de serrage (24) ou des mors de serrage (25).

9. Broche à moteur selon une des revendications précédentes, **caractérisée en ce qu'**au moins une partie du canal de nettoyage (40) est formée par le porte-outil (11) prévu pour recevoir la tige de l'outil d'usinage.

10. Broche à moteur selon une des revendications précédentes, **caractérisée en ce que** le fluide de nettoyage s'échappe du porte-outil (11) en direction approximativement axiale par rapport à l'axe (10) de la broche lorsque la vanne d'arrêt (5) est ouverte.

11. Broche à moteur selon une des revendications précédentes, **caractérisée en ce qu'**une dérivation (43) est prévue dans le canal de nettoyage (40) après la vanne d'arrêt (5) et par laquelle le courant du fluide de nettoyage est divisé et orienté vers la fente (42) entre les éléments de la pince à serrage (24) ou de(s) mors de serrage (25) et de l'arbre de rotation (3) ou du porte-outil (11).

12. Broche à moteur selon une des revendications précédentes, **caractérisée en ce que** la pince de serrage (24), les éléments de la pince de serrage (24) ou le(s) mors de serrage (25) comporte au moins une ouverture ou un perçage permettant de former cette dérivation (43).

13. Broche à moteur selon une des revendications précédentes, **caractérisé par** un branchement (6) destiné au fluide de nettoyage sous pression et par une commande de relâchement (21) formée par un vérin (29) commandé par le fluide de nettoyage mis sous pression de façon à pouvoir piloter la vanne d'arrêt (23) par la pression du fluide de nettoyage.
